# EUROPEAN PATENT APPLICATION

(11) **EP 4 822 911 A1**
(43) Date of publication of application: **14.10.2026**
(21) Application number: 25382362.9
(22) Date of filing: 08.04.2025
(51) Int. Cl.: H01R 13/453, H01R 24/76

(54) **ELECTRICAL POWER OUTLET**

(71) Applicant: Schneider Electric España, S.A., 08019 Barcelona (ES)
(72) Inventor: González Iribas, Aitor, 08019 Barcelona (ES); Marcos Serrano, Diego, 08019 Barcelona (ES)
(74) Representative: Plasseraud IP

(57) **Abstract**

The present invention relates to a power outlet comprising a sub-assembly (1) with an axially displaceable cover (3). The cover (3) comprises stop projections (3.1, 3.2) which project in accordance with guiding protuberances (2.1, 2.2) of a casing of the sub-assembly, preventing the displacement of the cover (3) in a direction perpendicular to the axis joining the connection holes (2.4) in their sliding contact of axial displacement of the cover (3).

## Description

### TECHNICAL FIELD

The present invention relates to the technical field of power outlets intended to be fastened to flat surfaces, normally walls or partitions, and consisting essentially, but not exclusively, of a frame for fastening to said surface, a mechanism box, a functionally diverse sub-assembly including at least one cover, and possible corresponding trim elements.

### BACKGROUND OF THE INVENTION

Power outlets of the type mentioned in the previous section are characterised by a fastening frame, which is the first element in contact with the mounting wall, a mechanism box (with the conductive metal parts for connecting the corresponding cables and the insertion of the pins of the respective plug) and a series of additional elements, some of which are optional and which are hereinafter referred to as sub-assembly (of the outlet). In addition, they may include various trim elements or components, such as an outer trim frame.

The aforementioned sub-assembly usually includes a cover with holes on a front surface visible to the user for the pins of the corresponding plug to pass through. The outlet, in particular the mechanism box, incorporates elastic means to allow the axial depression of the cover, in the direction of the wall, and its subsequent recovery until it is flush with the trim frame. One of the usual solutions for fastening the sub-assembly to this front cover consists of using the wall-mounted frame of the outlet as an anchorage area for the sub-assembly. With regard to the attachment of the mechanism box to the installation box fastened to the wall, or for fastening directly to the recess made in the wall, there are cases, such as the outlets used for example on the Danish market, where the fastening claws or means for fastening the power outlet are arranged inside the mechanism box, and are not accessible after the aforementioned sub-assembly is fastened to the frame. This arrangement makes it difficult to subsequently adjust or disassemble the power outlet.

A representative document of the prior art is patent EP3512045 in which the sub-assembly is fastened to the frame, and in which the axial movement of the cover of the power outlet is limited by a stop comprised in the mechanism box.

### DESCRIPTION OF THE INVENTION

Considering the objectives and advantages outlined in the previous section, a general description is provided of the elements and features that contribute to obtaining it, according to which the present invention provides an electrical power outlet with the following features. To facilitate the interpretation of said technical elements and features, the following parts known in outlets of this type are identified: a fastening frame for fastening the outlet to a mounting wall, a mechanism box, an outer trim and a sub-assembly including an axially movable cover in a casing, and a shutter and a box inside said casing of the sub-assembly.

In the description, "top" and "bottom" are understood as a position with respect to the imaginary axis joining the two electrical connection holes of the outlet, as viewed from the front face of the outlet. And "right" and "left" are understood as the position relative to the plane perpendicular to the imaginary axis of the two electrical connection holes of the outlet that passes through the centre of the outlet. All this for the usual wall installation of an outlet with the axis of the connection holes parallel to the floor.

Thus, the subject matter of the invention relates to a power outlet with the above-mentioned common features, and wherein the cover comprises at least a first stop projection projecting from the inner surface of the cover on one side of the axis joining the two connection holes of the cover, and at least a second projection projecting from the inner surface of the cover on the opposite side of the axis joining the two connection holes of the cover; and the casing comprising at least a first guiding protuberance projecting from the bottom thereof in line with the first stop projection, and the casing comprising at least a second guiding protuberance in line with the second stop projection, such that during axial displacement of the cover, a wall of the guiding protuberance parallel to the axis joining the two connection holes of the casing limits the displacement of the cover in a direction perpendicular to the axis joining the connection holes in the sliding contact thereof with the corresponding stop projection.

This prevents the vertical movement of the cover during its axial displacement, avoiding misalignment or jamming of the cover, beyond the circular configuration of the casing in line with the circular configuration of the cover, thus preventing the rotation of the cover.

Preferably, the casing comprises two pairs of guiding protuberances displaced respectively with respect to a central axis perpendicular to the axis joining the two connection holes of the casing. That is, two first protuberances that are arranged above the axis of the electrical connection holes, and two second protuberances that are arranged below the axis of the electrical connection holes. The four protuberances are symmetrically distributed with respect to a central point of the axis joining the two electrical connection holes of the casing, the cover comprising two pairs of stop projections in line with the guide protuberances, such that the stop projections are arranged between the side wall of the casing and the guide protuberances during the axial displacement of the cover.

This ensures better limitation of the movement of the cover in the vertical direction during axial displacement.

According to an alternative embodiment, the guiding protuberances of the casing are integrally connected to the side wall of the casing.

This avoids breakage of the protuberances by increasing the rigidity of the attachment thereof to the side wall of the casing, thus providing a more robust and reliable power outlet.

According to a feature of the invention, the stop projections and the guiding protuberances have a corresponding "L" corner shape. Due to this configuration, the protuberances and projections are more robust to prevent bending or breakage thereof.

In accordance with another feature of the invention, the longitudinal dimension of the stop projection is equal to the longitudinal dimension of the guiding protuberance being substantially half the length of the casing.

Due to this configuration, pitching or rotation with respect to the transverse axis is avoided in order to maintain the axial displacement position of the cover and prevent jamming.

According to another feature of the invention, the casing comprises a hole adjacent to the guiding protuberance configured to allow the engagement of the end of the stop projection.

Due to this configuration, the prevention of pitching and rotation is reinforced, securing the displacement blocking position and preventing the stop projection from breaking.

Lastly, according to another alternative embodiment, it is intended that the cover additionally comprises two first protrusions arranged on one side of the axis joining the two connection holes and two second protrusions arranged on the opposite side symmetrically with respect to the axis joining the two connection holes, the casing comprising grooves in line with said protrusions for guiding same in the axial displacement of the cover by limiting the lateral displacement of the protrusions with the side wall of the grooves arranged perpendicular to the axis joining the two connection holes, and the grooves having a longitudinal dimension equal to the longitudinal dimension of the protrusions.

This results in a better guiding of the cover in its axial displacement, restricting the horizontal movement as well as movement in the vertical direction, thus preventing the cover from rotating or being misaligned, as well as preventing pitching in one direction as well as in the transverse direction, resulting in a jam-free and therefore more reliable outlet.

### BRIEF DESCRIPTION OF THE DRAWINGS

Figure 1 shows an exploded view of a power outlet which is the subject matter of the invention.
Figure 2 shows an exploded view similar to that of figure 1 but from the rear perspective of the power outlet.
Figure 3 shows a perspective view of the front portion of the casing.
Figure 4 shows a perspective view of the rear portion of the cover.
Figure 5 shows a rear perspective view of the casing together with the cover in the inactive position.
Figure 6 shows a cross-sectional view of Figure 5.
Figure 7 shows a rear perspective view of the casing together with the cover in the operating position.
Figure 8 shows a cross-sectional view of Figure 7.

### PREFERRED EMBODIMENT OF THE INVENTION

In light of the aforementioned figures, and in accordance with the adopted numbering, one may observe therein a preferred exemplary embodiment of the invention, which comprises the parts and elements indicated and described in detail below.

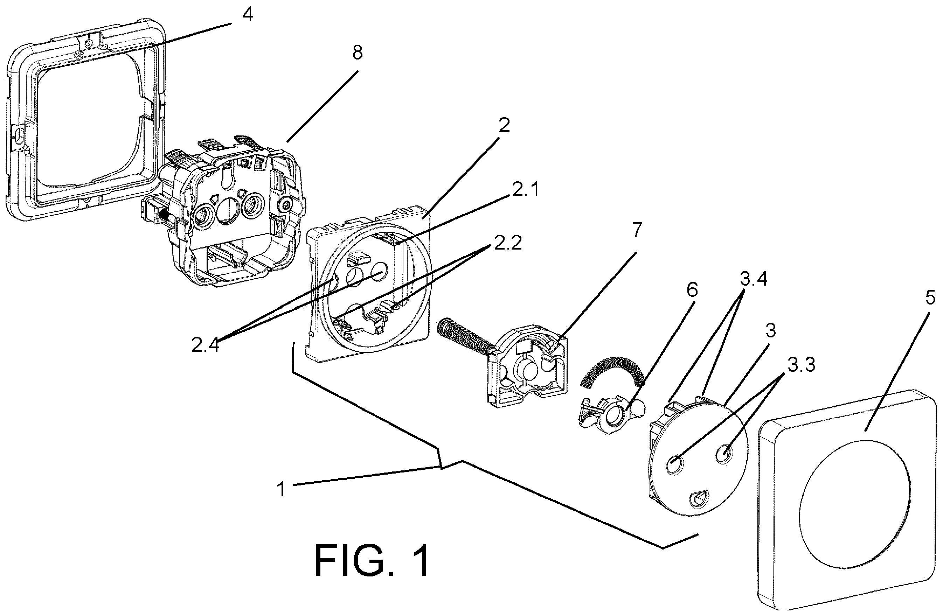

In accordance with the practical embodiment of the figures, as can be seen in figure 1, a perspective view of the power socket of the present invention is shown exploded and viewed from the front. From left to right, firstly there is a fastening frame (4) for fastening to a mounting wall, then a mechanism box (8), a sub-assembly (1) and a trim (5).

The sub-assembly (1) in turn includes a casing (2), which houses a box (7) with a shutter (6) and a cover (3). Normally, in existing power outlets, the sub-assembly (3) is fastened to the frame (4). Furthermore, in the power outlets to which the present invention is particularly, but not exclusively, aimed, the general fastening claws of the outlet are arranged in the mechanism box (8), such that, when the sub-assembly (1) is mounted, said claws are concealed and occupy the space where the guide of the cover of the sub-assembly is usually arranged. Outlets of this type are commonly used, for example, in Denmark, and also have the particular feature that the earth connection pin (of the plug) is located below the axis joining the two electrical connection holes (2.4).

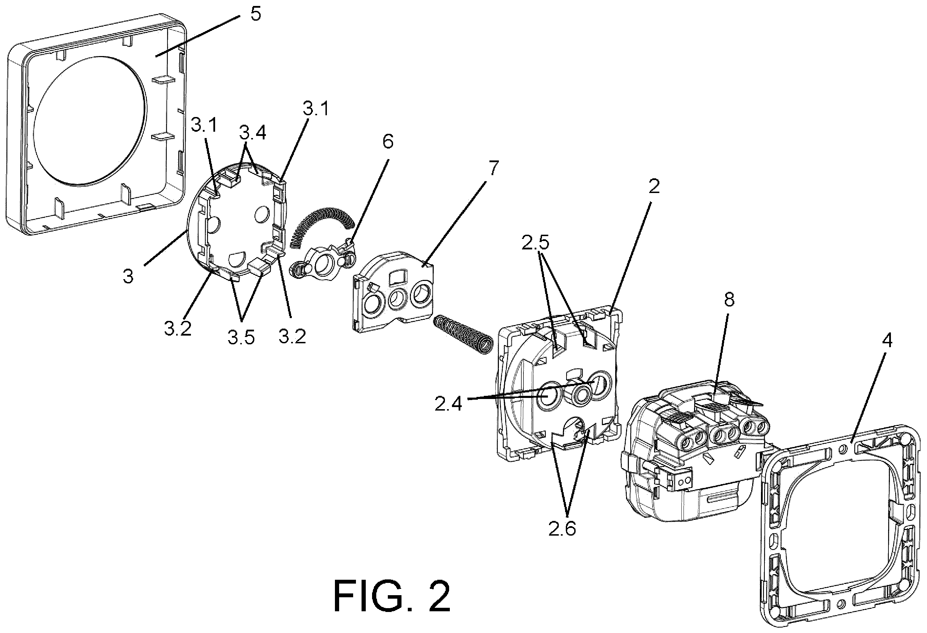

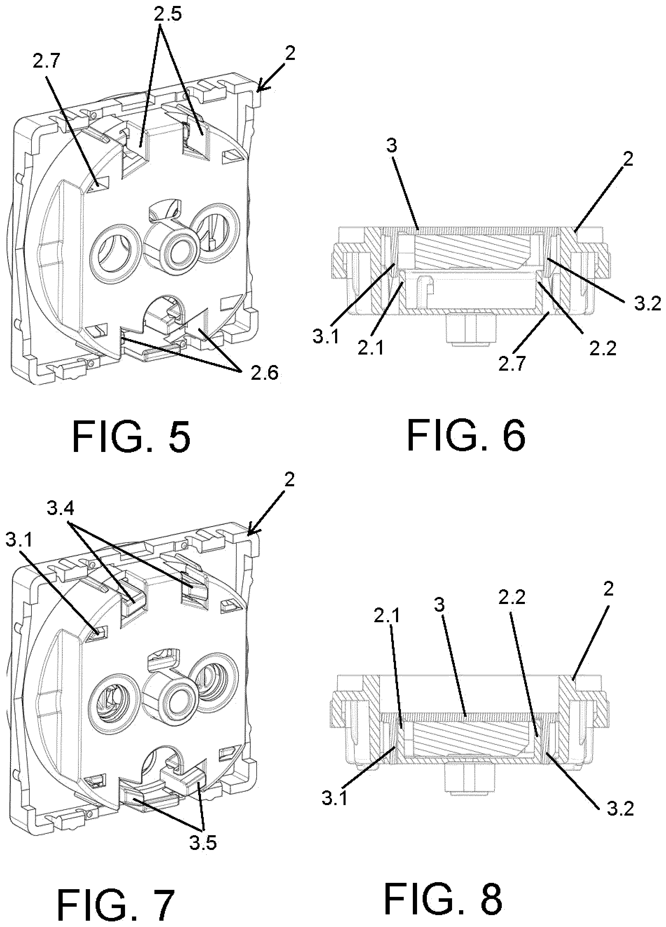

The present invention proposes a fastening system for fastening the sub-assembly (1) to the mechanism box (8) and not to the frame (4), although the sub-assembly (1) could be fastened to the frame (4) while maintaining the features that define the invention. This fastening is preferably performed by clipping with the tabs of the casing (2) in line with projections of the mechanism box (8). Furthermore, the cover (3) of the power outlet illustratively shown in these figures has an axial displacement mechanism (that is, perpendicular to the mounting wall) such that said cover (3) has two limit positions: an inactive upper or flush position with the trim frame (5) (Figures 5 and 6) and a lower or lowered operating position with respect to the trim (5) (Figures 7 and 8). The main purpose of this mechanism is aesthetic in nature and to prevent the accumulation of dirt in the usual cavity found in outlets without this axial path. Figures 1 and 2 show a conical elastic element (spring) which forms part of the axial displacement mechanism of some of the outlets of this type and which is arranged in the mechanism box (8).

The axial displacement of the cover (3) is ensured by the guiding between the circular geometry of the cavity of the casing (2) and the matching geometry of the surface of the cover (3). However, in addition, and as a distinctive element of the present invention, the correct axial movement of the cover (3) is ensured by the use of at least a first stop projection (3.1) projecting from the inner surface of the cover (3) above the imaginary axis joining the two connection holes (3.3) of the cover (3), and at least a second projection (3.2) projecting below said axis joining the connection holes (3.3), while the casing (2) comprises at least a first guiding protuberance (2.1) in line with the first stop projection (3.1), and a second guiding protuberance (2.2) in line with the second stop projection (3.2), such that during axial displacement of the cover (3) a wall of the guiding protuberance (2.1, 2.2) parallel to the axis connecting the two connection holes (2.4) of the casing (2), limits the displacement of the cover (3) in the vertical direction in its sliding contact with the corresponding stop projection (3.1, 3.2).

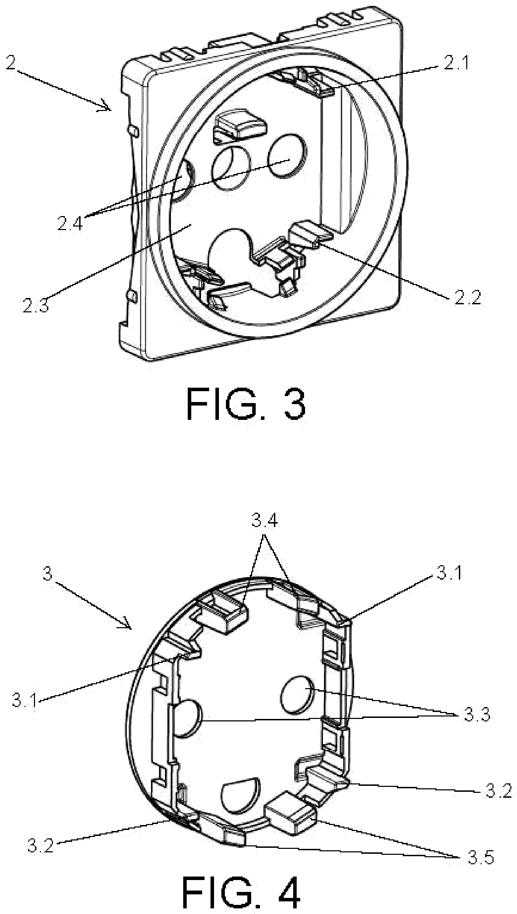

Preferably, as can be seen in Figures 2 and 4, the cover (3) comprises four stop projections (3.1, 3.2) arranged at the corners in symmetrical positions with respect to the centre of the cover (3), and integral with an engagement flange of the cover (3).

Furthermore, as can be seen in Figures 1 and 3, the casing (2) comprises four guiding protuberances (2.1, 2.2) projecting from the bottom (2.3) of the casing (2) in line with the stop projections (3.1, 3.2), that is, said guiding protuberances (2.1, 2.2) comprising a wall parallel to the horizontal axis of sliding contact with the wall of the stop projection (3.1, 3.2). As such, during the axial displacement of the cover (3), said cover (3) is guided by the sliding contact between the walls parallel to the horizontal axis of the first upper stop projections (3.1) and the second lower stop projections (3.2) with the guiding protuberances (2.1, 2.2) of the casing (2). As such, the cover (3) moves engaged between said guiding protuberances (2.1, 2.2), preventing the vertical displacement of the cover.

Additionally, according to the practical embodiment of the figures, the protuberances (2.1, 2.2) project at a distance from the cylindrical side wall of the cavity of the casing (2), such that the cover (3) moves with the stop projections (3.1, 3.2) thereof engaged between the cylindrical side wall and the guiding protuberances (2.1, 2.2), thus ensuring clearance-free guiding and preventing the vertical movement of the cover (3) during axial displacement.

This configuration can be seen more clearly in the sequence of movements shown in the figures, where Figures 5 and 6 show the cover (3) in its inactive position, that is, in its position flush with the trim (5), where the cross-sectional figure 6 shows the preliminary contact between the end of the stop projection (3.1, 3.2) with the end of the guiding protuberance (2.1, 2.2). Figures 7 and 8 then show the cover (3) in its final operating position (when the plug has been fully inserted for electrical contact) where the wall of the stop projection (3.1, 3.2) is in full contact with the wall of the guiding protuberance (2.1, 2.2). Figure 8 shows more clearly the engagement between the cover (3) and the casing (2) that allows the guiding while preventing the vertical displacement of the cover (3).

According to an alternative embodiment, the casing (2) optionally comprises holes (2.7) at the bottom (2.3) thereof for engaging, adjacent to the guiding protuberances (2.1, 2.2), configured such that in the operating position, the ends of the stop projections (3) of the cover (3) engage in said holes (2.7), resulting in a more robust configuration that avoids breakage or bending of the stop projections (3). This configuration also re-enforces the functionality of the stop projections (3.1, 3.2) which, due to their longitudinal dimension similar to the longitudinal dimension of the guiding protuberances (2.1, 2.2), prevents the cover (3) from pitching, that is, from rotating with respect to the axis connecting the connection holes (3.3).

Preferably, as can be seen in Figures 2 and 4, said stop projections (3.1, 3.2) are "L"- or corner shaped, comprising a wall parallel to the horizontal axis, and a wall substantially parallel to the vertical axis, the guiding protuberances (2.1, 2.2) having a reciprocal "L" geometry, such that a more robust element is obtained.

In order to prevent the cover (3) from also moving in the horizontal direction, it is intended that the cover (3) comprises four protrusions (3.4, 3.5) in opposite positions two by two with respect to the axis joining the connection holes (3.3), and in a centred position, the casing (2) comprising grooves (2.5, 2.6) in line with said protrusions (3.4, 3.5), such that said grooves (2.5, 2.6) allow the guiding of the cover (3), limiting its displacement in the horizontal direction when the protrusions contact the inner walls of the grooves (2.5, 2.6). This configuration can be seen in the sequence figures described above, where Figure 5 shows the grooves (2.5, 2.6) of the casing (2) before the displacement of the cover (3), and Figure 7 shows the protrusions (3.4, 3.5) engaged between the inner walls of the grooves (2.5, 2.6) which prevent displacement in the horizontal direction. Additionally, similar to the configuration of the stop projections (3.1, 3.2), the longitudinal dimension of the protrusions (3.4, 3.5) is similar to the longitudinal dimension of the grooves (2.5, 2.6), preventing pitching according to a rotation along an axis perpendicular to the axis joining the connection holes (3.3). This configuration, in combination with the aforementioned restriction of movement in the vertical direction gives the power outlet a greater robustness and reliability, preventing jamming or breakage, and consequently extending its useful life.

## Claims

1. A power outlet comprising a fastening frame (4) for fastening to a wall, a mechanism box (8), an outer trim (5), and a sub-assembly (1) between the mechanism box (8) and the trim (5), said sub-assembly (1) including an axially displaceable cover (3) for arranging same flush with the outer trim (5) in an inactive position, and a casing (2), **characterised in that** the cover (3) comprises at least a first stop projection (3.1) projecting from the inner surface of the cover (3) on one side of the axis joining the two connection holes (3.3) of the cover (3), and at least a second projection (3.2) projecting from the inner surface of the cover (3) on the opposite side of the axis joining the two connection holes (3.3) of the cover (3); and the casing (2) comprising at least a first guiding protuberance (2.1) projecting from the bottom (2.3) thereof in line with the first stop projection (3.1), and the casing (2) comprising at least a second guiding protuberance (2.2) in line with the second stop projection (3.2), such that during axial displacement of the cover (3), a wall of the guiding protuberance (2.1, 2.2) parallel to the axis joining the two connection holes (2.4) of the casing (2) limits the displacement of the cover (3) in a direction perpendicular to the axis joining the connection holes (2.4) in their sliding contact with the corresponding stop projection (3.1, 3.2).

2. The power outlet according to claim 1, wherein the casing (2) comprises two pairs of guiding protuberances (2.1, 2.2) displaced respectively with respect to a central axis perpendicular to the axis joining the two connection holes (2.4) of the casing (2), being symmetrically distributed with respect to a central point of the axis joining the two holes (2.4) for electrical connection of the casing (2), the cover (3) comprising two pairs of stop projections (3.1, 3.2) in line with the guiding protuberances (2.1, 2.2), such that the stop projections (3.1, 3.2) are arranged between the side wall of the casing (2) and the guiding protuberances (2.1, 2.2) during axial displacement of the cover (3).

3. The power outlet according to claim 1, wherein the guiding protuberances (2.1, 2.2) are connected to the wall of the casing (2).

4. The power outlet according to any one of the preceding claims, wherein the stop projections (3.1, 3.2) and the guiding protuberances (2.1, 2.2) have an "L" corner shape.

5. The power outlet according to any one of the preceding claims, wherein the longitudinal dimension of the stop projection (3.1, 3.2) is equal to the longitudinal dimension of the guiding protuberances (2.1, 2.2) being substantially half the length of the cavity of the casing (2).

6. The power outlet according to any one of the preceding claims, wherein the casing (2) comprises a hole (2.7) adjacent to the guiding protuberances (2.1, 2.2) configured to allow the engagement of the end of the stop projection (3.1, 3.2).

7. The power outlet according to any of the preceding claims, wherein the cover (3) comprises two first protrusions (3.4) arranged on one side of the axis joining the two connection holes (3.3) and two second protrusions (3.5) arranged on the opposite side symmetrically with respect to the axis joining the two connection holes (3.3), the casing (2) comprising grooves (2.5, 2.6) in line with said protrusions (3.4, 3.5) for guiding same in the axial displacement of the cover (3) limiting the lateral displacement of the protrusions (3.4, 3.5) with the side wall of the grooves (2.5, 2.6) arranged perpendicular to the axis joining the two connection holes (2.4), and the grooves (2.5, 2.6) having a longitudinal dimension equal to the longitudinal dimension of the protrusions (3.4, 3.5).
